# EUROPÄISCHE PATENTSCHRIFT

(11) **EP 1 798 358 B1**
(45) Veröffentlichungstag und Bekanntmachung des Hinweises auf die Patenterteilung: **28.11.2018**
(21) Anmeldenummer: 06125291.2
(22) Anmeldetag: 04.12.2006
(51) Int. Cl.: E04B 1/76, E04F 13/08, E04D 3/36, F16B 13/08, F16B 13/12

(54) **Befestigungselement für die Befestigung von Dämmstoffplatten an einem Untergrund**
Mounting element for attaching insulation boards to a subsurface
Elément de fixation pour la fixation de plaques de matériau isolant sur un sous-sol

(30) Priorität: 14.12.2005 DE 102005000185
(43) Veröffentlichungstag der Anmeldung: 20.06.2007
(73) Patentinhaber: HILTI Aktiengesellschaft, 9494 Schaan (LI)
(72) Erfinder: Zimmerer, Claudia, 88131 Lindau (DE); Spröwitz, Michael, 6800 Feldkirch-Tisis (AT)
(74) Vertreter: Hilti Aktiengesellschaft Corporate Intellectual Property

(56) Entgegenhaltungen:
- EP-A- 0 974 758
- EP-A- 1 318 250
- EP-A- 1 691 086
- DE-A1- 10 106 054
- DE-U1- 29 623 122
- US-A- 3 133 378

## Beschreibung

Die Erfindung betrifft ein Befestigungselement für die Befestigung von Dämmstoffplatten an einem Untergrund.

Zur Befestigung von Dämmstoffplatten, beispielsweise bei einem Wärmedämm-Verbundsystems, an einer Unterkonstruktion, wie z. B. an einer Wand, ist beispielsweise aus der DE 296 23 122 U1 als Befestigungselement ein Dübel aus Kunststoff mit einem Spreizelement bekannt. Der Dübel weist einen sich entlang einer Längsachse erstreckenden Dübelschaft auf. Der Dübelschaft weist an einem ersten Ende eine mittels eines Spreiznagels als Spreizelement aufweitbare Spreizzone für die Verankerung des Dübels im Untergrund auf. An einem dem ersten Ende gegenüberliegenden zweiten Ende des Dübelschafts ist als Halteeinrichtung für die Fixierung der Dämmplatte am Untergrund ein Druckteller angeordnet.

Nachteilig an der bekannten Lösung ist, dass der Druckteller an der Oberfläche der Dämmstoffplatte zu liegen kommt und beim anschliessenden Verputzen der Dämmstoffplatte ein unregelmässiges Erscheinungsbild entstehen kann. Zudem können bei allfälligen Hohllagen zwischen der Dämmstoffplatte und dem Untergrund Durchbiegungen der Dämmstoffplatte auftreten, die unter Umständen zum Brechen der Dämmstoffplatte führen können.

Aus der EP 1 318 250 A2 ist ein gattungsgemässes Befestigungselement für die Befestigung von Dämmstoffplatten an einem Untergrund bekannt, das als Halteeinrichtung für die Fixierung der Dämmplatte am Untergrund einen Druckteller aufweist, der an der mit dem Dämmstoff in Anlage kommenden Unterseite mit Schneidvorrichtungen versehen ist. Zum Setzen des Befestigungselementes wird dieses in ein zuvor durch den Dämmstoff in die Unterkonstruktion erstelltes Bohrloch eingeführt und über ein Drehmitnahmemittel derart gedreht, dass der Dämmstoff bereichsweise angeschnitten und der Dübelteller im Dämmstoff versenkt wird. Dabei wird der Dämmstoff unterhalb des Dübeltellers komprimiert. Anschliessend wird mittels eines Verschlusselements aus Dämmstoff die geschaffene Vertiefung in der Dämmstoffplatte verschlossen.

Nachteilig an der bekannten Lösung ist, dass durch das Komprimieren des Dämmstoffes dessen Rohdichte und damit die Dämmeigenschaften des Dämmstoffes verändert werden. Zudem können bei allfälligen Hohllagen zwischen dem Dämmstoff und dem Untergrund Durchbiegungen der Dämmstoffplatte auftreten, die unter Umständen zum Brechen der Dämmstoffplatte führen können.

Aus der EP 1 691 086 A1, welche einen Stand der Technik nach Art. 54(3) EPÜ bildet, ist ein Dämmstoffhalter zum Anbringen von Dämmstoffplatten an einem tragenden Untergrund, mit einem die Dämmstoffplatte durchsetzenden Halterschaft und einem daran anschliessenden Halterteller bekannt, wobei der Halterteller durch Abstützelemente gebildet wird, die mit einem hinteren Ende des Halterschaftes schwenkbar verbunden sind und an ihren Stirnflächen Schneidvorrichtungen zum Einscheiden der Dämmstoffplatte beim Einbringen des Haltertellers in die Dämmstoffplatte aufweisen.

Aufgabe der Erfindung ist es, ein Befestigungselement für die Befestigung von Dämmstoffplatten an einem Untergrund zu schaffen, das eine sichere Befestigung der Dämmstoffplatte gewährleistet, ohne dabei den Dämmstoff in seinen Eigenschaften zu beeinträchtigen, und das einfach setzbar ist.

Die Aufgabe ist durch die Merkmale des unabhängigen Anspruchs 1 gelöst. Vorteilhafte Weiterbildungen sind in den Unteransprüchen dargelegt.

Anspruch 1 sieht ein Befestigungselement für die Befestigung von Dämmstoffplatten an einem Untergrund vor, mit einem sich entlang einer Längsachse erstreckenden Dübelschaft, der ein erstes Ende und ein dem ersten Ende gegenüberliegendes zweites Ende aufweist, wobei im Bereich des ersten Endes eine Spreizzone für die Verankerung des Befestigungselementes im Untergrund vorgesehen ist, mit einer Halteeinrichtung für die Fixierung der Dämmplatte am Untergrund und mit einem als Schraube ausgebildeten Spreizelement zum Aufspreizen der Spreizzone, wobei die Halteeinrichtung aus einer axial in Richtung der Längsachse verschiebbaren Segmenthülse gebildet ist, wobei die Segmenthülse mehrere sich axial in Richtung der Längsachse erstreckende, radial angeordnete Segmente beinhaltet, die voneinander separierbar sind, und wobei die Segmenthülse mittels des Spreizelementes und eines am zweiten Ende des Dübelschafts angeordneten Umlenkmittels aufspreizbar ist.

Das erfindungsgemässe Befestigungselement wird in ein zuvor durch den Dämmstoff in den Untergrund erstelltes Bohrloch eingeführt. Beim Verspannen der Schraube, die erfindungsgemäss das Spreizelement des Befestigungselementes ausbildet, wird die axial verschiebbare Segmenthülse in Setzrichtung beziehungsweise in Richtung des ersten Endes des Dübelschafts verschoben, wobei sich die axial in Richtung der Längsachse erstreckenden, radial angeordneten Segmente über das zweite Ende des Dübelschafts schieben und dabei separiert sowie aufgespreizt werden. Das erfindungsgemässe Befestigungselement wird beim Setzvorgang gleichzeitig im Untergrund und im Dämmstoff verankert, wobei kein spezielles Setzwerkzeug zum Setzen des Befestigungselementes erforderlich ist.

Mit einem solchen Befestigungselement sind einzig die Setztiefe im Untergrund sowie der Abstand der Verankerung in der Dämmstoffplatte zum Untergrund vorgegeben, womit mit der gleichen Ausgestaltung eines Befestigungselementes verschiedene Materialstärken beziehungsweise Materialdicken von Dämmstoffplatten am Untergrund fixierbar sind. Weiter findet beim Setzen des Befestigungselementes nur eine Bewegung aller Teile in Setzrichtung, d. h. in Richtung des ersten Endes des Dübelschafts statt, was eine einfache und somit wirtschaftliche Ausgestaltung des Befestigungselementes ermöglicht. Dies ist insbesondere bei einem Massenartikel, wie es das erfindungsgemässe Befestigungselement darstellt, gegenüber aufwändig ausgebildeten Ausführungen ein wesentlicher Vorteil. Das Befestigungselement wird dem Anwender vorteilhaft vormontiert als eine zusammengesetzte Einheit bestehend aus dem Dübelschaft, der Segmenthülse und der durch die Segmenthülse hindurchgeführte Schraube, die bereits bereichsweise in den Dübelschaft eingreift, zur Verfügung gestellt.

Die axiale Länge der Segmente ist für eine ausreichende Haltekraft derselben vorteilhaft derart gewählt, dass die freien Enden der Segmente im aufgespreizten Zustand der Segmente in einer radial zur Längsachse verlaufenden Ebene einen Umfang aufspannen, der dem Umfang eines herkömmlichen Dübeltellers entspricht. Der Aufspreizwinkel der Segmente bezüglich der Längsachse des Befestigungselementes liegt im Bereich von 10° bis 90°.

Die Eigenschaften des Dämmstoffs werden im Bereich der Befestigung trotz der sicheren Fixierung der Dämmstoffplatte nicht oder wenn, nur unwesentlich beeinflusst. Die nach dem Setzen des Befestigungselementes gegen aussen verbleibende Öffnung wird beispielsweise durch ein Verschlusselement aus Dämmstoff verschlossen. Mit dem erfindungsgemässen Befestigungselement wird eine Störung der Fassadenoberfläche vermieden, die üblicherweise beim anschliessenden Verputzen der Fassade zu Unregelmässigkeiten des Erscheinungsbildes führt.

Vorzugsweise weist die Segmenthülse ein erstes Ende und ein dem ersten Ende gegenüberliegendes zweites Ende auf, wobei das erste Ende der Segmenthülse dem zweiten Ende des Dübelschafts zugewandt ist, und wobei die die Segmenthülse ausbildenden Segmente an dem ersten Ende der Segmenthülse eine sich radial nach aussen verjüngende Kontur aufweisen. Die Innenkontur der Segmenthülse vergrössert sich in Richtung des zweiten Endes der Segmenthülse beziehungsweise in Richtung der freien Enden der Segmente, so dass Gleitflächen geschaffen werden, die den Aufspreizvorgang der Segmenthülse beim Verspannen sowie den Setzvorgang des Befestigungselementes erleichtern. Zwischen dem zweiten Ende der Segmenthülse und dem Beginn der sich nach aussen verjungenden Kontur weist jedes Segment für ein leichtes Aufspreizen der Segmenthülse vorteilhaft eine gerade und ebene Innenkontur auf.

Bevorzugt ist ein Ringkörper an dem zweiten Ende der Segmenthülse vorgesehen, der die Segmente auch im aufgespreitzen, voneinander separierten Zustand mittels einer biegeelastischen Verbindung zusammenhält. Gleichzeitig dient der Ringkörper als Angriffsfläche für einen Kopfabschnitt des Spreizelementes beim axialen Verschieben der Segmenthülse. Des Weiteren bildet dieser Ringkörper einen Anschlag für die axiale Verschiebung der Segmenthülse aus und verhindert dabei ein Überspreizen der einzelnen Segmente.

Vorzugsweise weisen die Segmente an deren Aussenseite eine dachförmige Aussenkontur auf, die sich axial in Richtung der Längsachse erstreckt. Durch die schneidenartige beziehungsweise dornartige Ausgestaltung der Segmente dringen diese leicht in die zu befestigende Dämmstoffplatte ein.

Bevorzugt weist die Segmenthülse drei bis zwölf Segmenten auf. Die Anzahl der Segmente ist durch die Materialeigenschaften des Dämmstoffs bestimmt, wobei mehrere Segmente eine gleichmässigere Krafteinleitung gewährleistet. Mit anderen Worten werden bei einer Vielzahl von Segmenten pro Segment geringere Kräfte als bei ein paar wenigen Segmenten in den Dämmstoff eingeleitet.

Vorzugsweise sind die Segmente der Segmenthülse über eine Bindenaht lösbar miteinander verbunden. Diese Bindenaht, die eine Sollbruchstelle für die Segmenthülse ausbildet, ist beispielsweise durch eine Verjüngung der Materialdicke beim Ausbilden der Segmenthülse ausgebildet. Bei einer Segmenthülse aus Kunststoff wird die Bindenaht z. B. durch ein Umspritzen eines entsprechend ausgebildeten Formteils erzeugt. In der Kunststofftechnik werden solche Bindenähte auch als Schwimmhäute bezeichnet.

Bevorzugt umfasst das Umlenkmittel am zweiten Ende der Dübelschaft radial von dem Dübelschaft abragende Vorsprünge, die das Separieren und Aufspreizen der Segmente beim axialen Versetzen der Segmenthülse unterstützen. Die Vorsprünge weisen beispielsweise die Form einer drei- oder vierseitigen Pyramide auf. Alternativ sind die Vorsprünge beispielsweise keilförmig ausgebildet, wobei diese vorteilhaft in Richtung des ersten Endes des Dübelschafts zunehmend ausgebildet sind.

Vorzugsweise entspricht die Anzahl der Vorsprünge der Anzahl der Segmente der Segmenthülse, so dass zum Aufspreizen der Segmenthülse für jedes Segment ein Vorsprung vorgesehen ist.

Bevorzugt umfasst das Umlenkmittel am zweiten Ende des Dübelschafts eine Fase, die das Aufspreizen der Segmente beim axialen Versetzen der Segmenthülse unterstützt. Die Fase verjüngt den Durchmesser in Richtung des zweiten Endes des Dübelschafts und weist vorteilhaft einen Winkel zur Längsachse im Bereich von 10° bis 80° auf. In einer weiteren vorteilhaften Ausführungsform umfasst das Umlenkmittel zusätzlich zu der Fase von dem Dübelschaft abragende Vorsprünge, deren Anzahl vorteilhaft der Anzahl der Segmente der Segmenthülse entspricht.

Alternativ umfasst das Umlenkmittel am zweiten Ende des Dübelschafts vorzugsweise einen radial vom Dübelschaft abragenden Kragenabschnitt, der von dem zweiten Ende des Dübelschafts in Richtung des ersten Endes des Dübelschafts konisch zunehmend ausgebildet ist. Bei dieser Ausführungsform wird das zweite Ende des Dübelschafts nicht geschwächt sondern zusätzlich verstärkt, wobei die konisch zunehmende Ausgestaltung des Kragenabschnitts das Aufspreizen der Segmente beim axialen Versetzen der Segmenthülse vorteilhaft unterstützt. Der vom konischen Verlauf des Kragenabschnitts und der Längsachse eingeschlossene Winkel beträgt vorteilhaft 10° bis 80°. Der Kragenabschnitt am zweiten Ende des Dübelschafts muss nicht zwingend umlaufend ausgebildet sein. Mehrere entlang des Umfangs zueinander beabstandete Teilabschnitte des Kragenabschnitts können ebenfalls das Umlenkmittel ausbilden, wobei die Anzahl der Teilabschnitte der Anzahl der Segmente der Segmenthülse entsprechen kann. Weiter können die einzelnen Teilabschnitte des Kragenabschnitts derart ausgebildet sein, dass zwei Segmente gleichzeitig beim Aufspreizen der Segmenthülse über diese gleiten.

Die einzelnen Teile des erfindungsgemässen Befestigungselementes sind beispielsweise aus einem Kunststoff gefertigt. Beispielsweise wird für eines oder alle Teile ein glasfaserverstärkter Kunststoff verwendet. Weiter können einzelne Teile auch aus Metall gefertigt sein. In einer vorteilhaften Ausführungsform umfasst das Befestigungselement einen Dübelschaft aus einem Kunststoff, eine Segmenthülse aus einem glasfaserverstärkten Kunststoff und ein als Schraube ausgebildetes Spreizelement aus einem Metall.

Die Erfindung wird nachstehend anhand von Ausführungsbeispielen näher erläutert. Es zeigen:
- Fig. 1: Eine Seitenansicht eines erfindungsgemässen Befestigungselementes im unverspreizten Zustand;
- Fig. 2: das in Fig. 1 gezeigte Befestigungselement im verspreizten Zustand;
- Fig. 3: einen Schnitt durch die Segmenthülse entlang der Linie III-III in Fig. 1;
- Fig. 4: einen Teilschnitt durch ein Segment der Segmenthülse entlang der Linie IV-IV in Fig. 3;
- Fig. 5: eine Detailansicht des zweiten Endes des Dübelschafts mit einer Variante der Umlenkeinrichtung; und
- Fig. 6: eine Detailansicht des zweiten Endes der Dübelschaft mit einer weiteren Variante der Umlenkeinrichtung.

Grundsätzlich sind in den Figuren gleiche Teile mit den gleichen Bezugszeichen versehen.

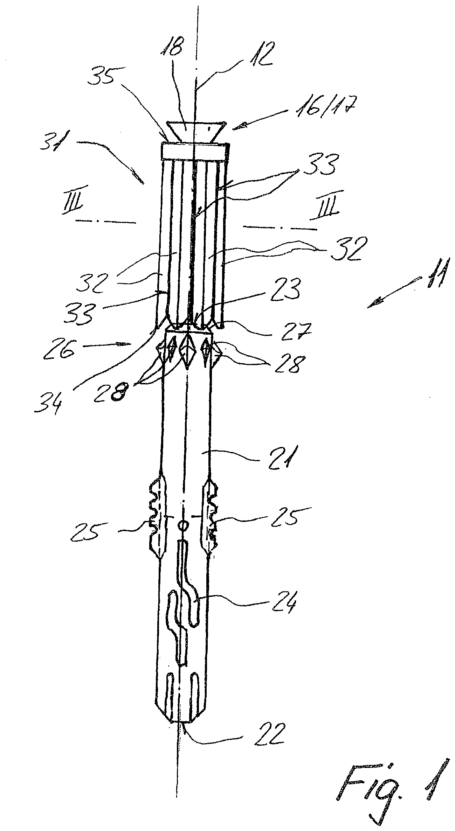

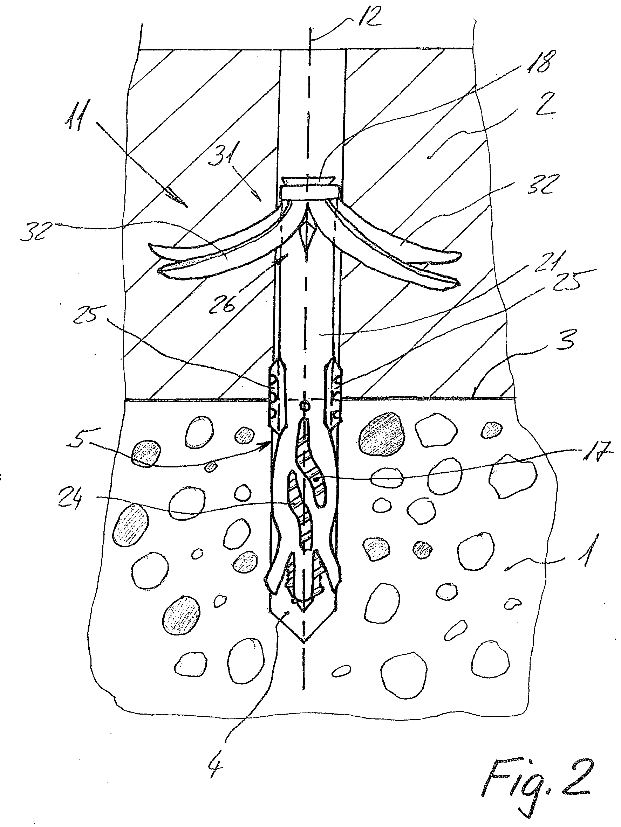

Das in den Fig. 1 und 2 dargestellte Befestigungselement 11 für die Befestigung von Dämmplatten 2 an einem Untergrund 1 umfasst einen sich entlang einer Längsachse 12 erstreckenden Dübelschaft 21, der ein erstes Ende 22 und ein dem ersten Ende 22 gegenüberliegendes zweites Ende 23 aufweist. Im Bereich des ersten Endes 22 ist eine von einer Schraube 17 als Spreizelement 16 aufspreizbare Spreizzone 24 für die Verankerung des Befestigungselementes 11 in dem Untergrund 1 vorgesehen. Weiter weist der Dübelschaft 21 bereichsweise radial zur Längsachse 12 versetzbare Verbreiterungen 25 als Verdrehsicherung des Dübelschafts 21 und damit des Befestigungselementes 11 auf. Am zweiten Ende 23 des Dübelschafts 21 sind als Umlenkmittel 26 eine Fase 27 und mehrere radial vom Dübelschaft 21 abragende, pyramidenförmig ausgebildete Vorsprünge 28 vorgesehen.

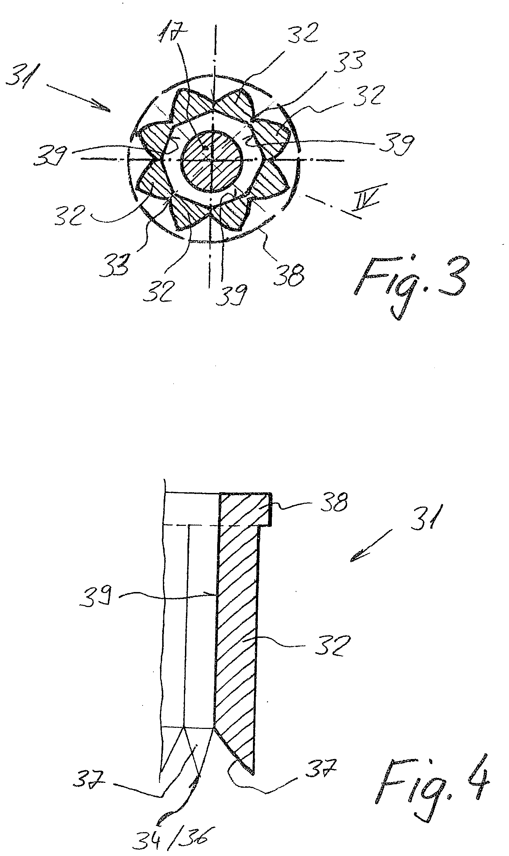

Die Halteeinrichtung für die Fixierung der Dämmplatte 2 am Untergrund 1 ist aus einer axial in Richtung der Längsachse 12 verschiebbaren Segmenthülse 31 gebildet, die acht sich axial in Richtung der Längsachse 12 erstreckende, radial zur Längsachse 12 angeordnete Segmente 32 sowie einen Ringkörper 38 beinhaltet (siehe Fig. 3). Die Segmenthülse 31 ist mittels des Spreizelementes 16 und des am zweiten Ende 23 des Dübelschafts 21 angeordneten Umlenkmittels 26 aufspreizbar. In diesem Ausführungsbeispiel entspricht die Anzahl der Vorsprünge 28 am Dübelschaft 21 der Anzahl der Segmente 32 der Segmenthülse, wobei aufgrund der gewählten Darstellung gemäss der Fig. 1 nur fünf dieser Vorsprünge gezeigt sind.

Die Segmenthülse 31 wird nachfolgend anhand der Fig. 3 und 4 beschrieben.

Die Segmenthülse 31 weist ein erstes Ende 34 und ein dem ersten Ende 34 gegenüberliegendes zweites Ende 35 auf, wobei im zusammengesetzten Zustand des Befestigungselementes 11 das erste Ende 34 der Segmenthülse 31 dem zweiten Ende 23 des Dübelschafts 21 zugewandt ist. Die Segmente 32 sind über eine Bindnaht 33 lösbar miteinander verbunden und von einander separierbar. Die die Segmenthülse 31 ausbildenden Segmente 32 weisen an ihrem freien Ende 36, das dem ersten Ende 34 der Segmenthülse 31 entspricht, eine sich radial nach aussen verjüngende Kontur 37 auf, wodurch sich der Innenquerschnitt der Segmenthülse 31 in Richtung des ersten Endes 34 der Segmenthülse 31 vergrössert. Zwischen dem zweiten Ende 35 der Segmenthülse 31 und dem Beginn der sich radial nach aussen verjüngende Kontur 37 weist jedes Segment 32 eine gerade und ebene Innenkontur 39 auf. Die Segmente 32 weisen zudem an deren Aussenseite eine dachförmige Aussenkontur auf, die sich axial in Richtung der Längsachse 12 erstreckt. An dem zweiten Ende 35 der Segmenthülse 31 ist der umlaufende Ringkörper 38 vorgesehen, der als Angriffsfläche für den Schraubenkopf 18 der Schraube 17 dient und die Segmente 32 am zweiten Ende 35 der Segmenthülse 31 beim Aufspreizen über eine biegeelastische Verbindung zusammenhält sowie zur Begrenzung des axialen Versetzweges der Segmenthülse 31 als Anschlag dient, wenn dieser mit dem zweiten Ende 23 des Dübelschafts 21 in Anlage kommt.

Nachfolgend wird anhand der Fig. 2 ein Setzvorgang des Befestigungselementes 11 beschrieben.

Die Dämmstoffplatte 2 wird beispielsweise mit einem Kleber 3 an dem Untergrund 1 vorfixiert. Dann wird durch die Dämmplatte 2 hindurch ein Bohrloch 4 in den Untergrund 1 erstellt und das Befestigungselement 11 im unverspreizten Zustand in dieses eingeführt, bis die Verbreiterungen 25 am Dübelschaft 21 sich mit der Bohrlochwandung 5 verkeilen. Anschliessend wird durch Verspannen der Schraube 17 einerseits die Spreizzone 24 aufgeweitet und andererseits über den Schraubenkopf 18 die Segmenthülse axial in Richtung der Längsachse 12 verschoben, wobei die Segmente 32 der Segmenthülse 31 über die Umlenkmittel 26 aufgespreizt werden, wobei die Bindenähte 33 reissen und die Segmente 32 in die Dämmstoffplatte 2 eindringen. Mit dem Spreizelement 16 das als Schraube 17 ausgebildet ist, wird gleichzeitig in einem Arbeitsschritt das Befestigungselement 11 im Untergrund 1 verankert und die Dämmplatte 2 am Untergrund 1 befestigt.

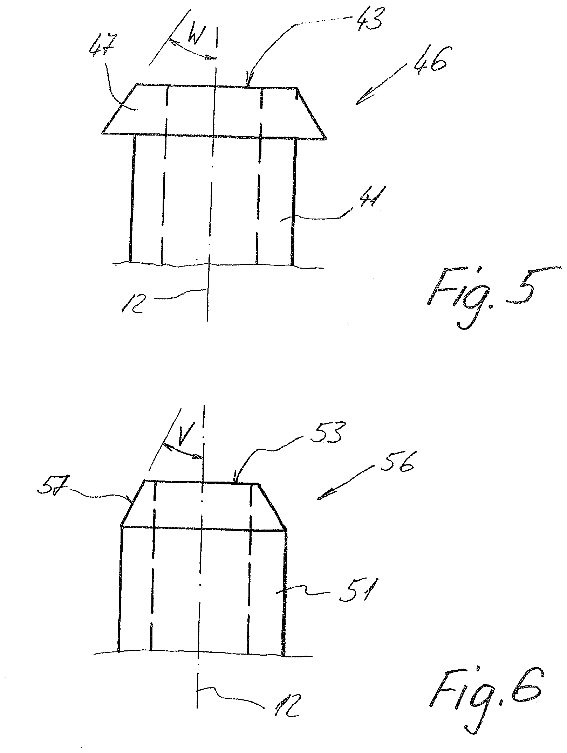

In Fig. 5 ist eine Alternative zu dem in der Fig. 1 bzw. 2 dargestellten Umlenkmittel 26 gezeigt. Das Umlenkmittel 46 am zweiten Ende 43 des Dübelschafts 41 ist als radial von der Dübelhülse 41 abragender Kragenabschnitt 47 ausgebildet, der von dem zweiten Ende 43 in Richtung des ersten Endes der Dübelhülse 41 konisch zunehmend ausgebildet ist. Der vom konischen Verlauf des Kragenabschnitts 47 und der Längsachse 12 eingeschlossene Winkel W beträgt etwa 40°.

In Fig. 6 ist eine weitere Alternative zu dem in der Fig. 1 bzw. 2 dargestellten Umlenkmittel 26 gezeigt. Das Umlenkmittel 56 am zweiten Ende 53 des Dübelschafts 51 ist als Fase 57 ausgebildet. Der von dem Verlauf der Fase 57 und der Längsachse 12 eingeschlossene Winkel V beträgt etwa 30°.

## Patentansprüche

1. Befestigungselement für die Befestigung von Dämmstoffplatten (2) an einem Untergrund (1) mit einem sich entlang einer Längsachse (12) erstreckenden Dübelschaft (21; 41; 51), der ein erstes Ende (22) und ein dem ersten Ende (22) gegenüberliegendes zweites Ende (23; 43; 53) aufweist, wobei im Bereich des ersten Endes (22) eine Spreizzone (24) für die Verankerung des Befestigungselementes (11) im Untergrund (1) vorgesehen ist, mit einer Halteeinrichtung für die Fixierung der Dämmplatte (2) am Untergrund (1) und mit einem als Schraube (17) ausgebildeten Spreizelement (16) zum Aufspreizen der Spreizzone (24), wobei die Halteeinrichtung aus einer axial in Richtung der Längsachse (12) verschiebbaren Segmenthülse (31) gebildet ist, wobei die Segmenthülse (31) mehrere sich axial in Richtung der Längsachse (12) erstreckende, radial angeordnete Segmente (32) beinhaltet, die voneinander separierbar sind, und wobei die Segmenthülse (31) mittels des Spreizelementes (16) und eines am zweiten Ende (23; 43; 53) des Dübelschafts (21; 41; 51) angeordneten Umlenkmittels (26; 46; 56) aufspreizbar ist.

2. Befestigungselement nach Anspruch 1, **dadurch gekennzeichnet, dass** die Segmenthülse (31) ein erstes Ende (34) und ein dem ersten Ende (34) gegenüberliegendes zweites Ende (35) aufweist, wobei das erste Ende (34) der Segmenthülse (31) dem zweiten Ende (23) des Dübelschafts (21) zugewandt ist, und wobei die die Segmenthülse (31) ausbildenden Segmente (32) an dem ersten Ende (34) der Segmenthülse (31) eine sich radial nach aussen verjüngende Kontur (37) aufweisen.

3. Befestigungselement nach Anspruch 2, **dadurch gekennzeichnet, dass** ein Ringkörper (38) an dem zweiten Ende (35) der Segmenthülse (31) vorgesehen ist.

4. Befestigungselement nach einem der Ansprüche 1 bis 3, **dadurch gekennzeichnet, dass** die Segmente (32) an deren Aussenseite eine dachförmige Aussenkontur aufweisen, die sich axial in Richtung der Längsachse (12) erstreckt.

5. Befestigungselement nach einem der Ansprüche 1 bis 4, **dadurch gekennzeichnet, dass** die Segmenthülse (31) drei bis zwölf Segmenten (32) aufweist.

6. Befestigungselement nach einem der Ansprüche 1 bis 5, **dadurch gekennzeichnet, dass** die Segmente (32) der Segmenthülse (31) über eine Bindenaht (33) lösbar miteinander verbunden sind.

7. Befestigungselement nach einem der Ansprüche 1 bis 6, **dadurch gekennzeichnet, dass** das Umlenkmittel (26) am zweiten Ende (23) des Dübelschafts (21) radial von dem Dübelschaft (21) abragende Vorsprünge (28) umfasst.

8. Befestigungselement nach Anspruch 7, **dadurch gekennzeichnet, dass** die Anzahl der Vorsprünge (28) der Anzahl der Segmente (32) der Segmenthülse (31) entspricht.

9. Befestigungselement nach einem der Ansprüche 1 bis 8, **dadurch gekennzeichnet, dass** das Umlenkmittel (26; 56) am zweiten Ende (23; 53) des Dübelschafts (21; 51) eine Fase (27; 57) umfasst.

10. Befestigungselement nach einem der Ansprüche 1 bis 6, **dadurch gekennzeichnet, dass** das Umlenkmittel (46) am zweiten Ende (43) des Dübelschafts (41) eine radial von dem Dübelschaft (41) abragenden Kragenabschnitt (47) umfasst, der von dem zweiten Ende (43) des Dübelschafts (41) in Richtung des ersten Endes der Dübelschaft (41) konisch zunehmend ausgebildet ist.

## Claims

1. Fastening element for fastening insulating panels (2) to a substrate (1) with a dowel shaft (21; 41; 51) extending along a longitudinal axis (12), which has a first end (22) and a second end (23; 43; 53) lying opposite the first end (22), in which an expansion area (24) is provided in the area of the first end (22) for anchoring the fastening element (11) in the substrate (1), with a holding device for fixing the insulating panel (2) to the substrate (1) and with an expansion element (16) made as a screw (17) for spreading out the expansion area (24), in which the holding device is made from a segmented sleeve (31) that may be moved axially in the direction of the longitudinal axis (12), in which the segmented sleeve (31) contains several segments (32) arranged radially, extending axially in the direction of the longitudinal axis (12), which may be separated from each other, and in which the segmented sleeve (31) may be spread out by means of the expansion element (16) and a means of deflection (26; 46; 56) arranged at the second end (23; 43; 53) of the dowel shaft (21; 41; 51).

2. Fastening element according to claim 1, **characterised in that** the segmented sleeve (31) has a first end (34) and a second end (35) lying opposite the first end (34), in which the first end (34) of the segmented sleeve (31) is turned towards the second end (23) of the dowel shaft (21) and in which the segments (32) forming the segmented sleeve (31) have a contour (37) that tapers radially outwards at the first end (34) of the segmented sleeve (31).

3. Fastening element according to claim 2, **characterised in that** a ring-shaped body (38) is provided at the second end (35) of the segmented sleeve (31).

4. Fastening element according to one of claims 1 to 3, **characterised in that** the segments (32) have a roof-shaped outer contour on their outside, which extends axially in the direction of the longitudinal axis (12).

5. Fastening element according to one of claims 1 to 4, **characterised in that** the segmented sleeve (31) has three to twelve segments (32).

6. Fastening element according to one of claims 1 to 5, **characterised in that** the segments (32) of the segmented sleeve (31) are connected to each other in a detachable way through a joint line (33).

7. Fastening element according to one of claims 1 to 6, **characterised in that** the means of deflection (26) at the second end (23) of the dowel shaft (21) comprise protrusions (28) projecting radially from the dowel shaft (21).

8. Fastening element according to claim 7, **characterised in that** the number of protrusions (28) corresponds to the number of segments (32) of the segmented sleeve (31).

9. Fastening element according to one of claims 1 to 8, **characterised in that** the means of deflection (26; 56) at the second end (23; 53) of the dowel shaft (21; 51) comprise a bevel (27; 57).

10. Fastening element according to one of claims 1 to 6, **characterised in that** the means of deflection (46) at the second end (43) of the dowel shaft (41) comprise a collar section (47) projecting radially from the dowel shaft (41), which is made increasing conically from the second end (43) of the dowel shaft (41) in the direction of the first end of the dowel shaft (41).

## Revendications

1. Elément de fixation pour la fixation de plaques en matériau isolant (2) sur une surface sous-jacente (1), comportant une tige de cheville (21 ; 41 ; 51) s'étendant le long d'un axe longitudinal (12) et comportant une première extrémité (22) et une seconde extrémité (23 ; 43 ; 53) opposée à la première extrémité (22), dans lequel une zone d'expansion (24) est prévue dans la zone de la première extrémité (22) pour l'ancrage de l'élément de fixation (11) dans la surface sous-jacente (1), comportant un dispositif de retenue pour la fixation de la plaque isolante (2) sur la surface sous-jacente (1) et un élément d'expansion (16) formé comme une vis (17) pour écarter la zone d'expansion (24), dans lequel le dispositif de retenue est formé à partir d'une douille à segments (31) mobile axialement en direction de l'axe longitudinal (12), dans lequel la douille à segments (31) contient plusieurs segments (32) agencés radialement et s'étendant axialement en direction de l'axe longitudinal (12), lesquels segments pouvant être séparés les uns des autres, et dans lequel la douille à segments (31) peut être écartée au moyen de l'élément d'expansion (16) et de moyens de déviation (26 ; 46 ; 56) agencés sur la seconde extrémité (23 ; 43 ; 53) de la tige de cheville (21, 41, 51) .

2. Elément de fixation selon la revendication 1, **caractérisé en ce que** la douille à segments (31) comporte une première extrémité (34) et une seconde extrémité (35) opposée à la première extrémité (34), dans lequel la première extrémité (34) de la douille à segments (31) est dirigée vers la seconde extrémité (23) de la tige de cheville (21), et dans lequel les segments (32) formant la douille à segments (31) ont, sur la première extrémité (34) de la douille à segments (31), un contour (37) qui se rétrécit radialement vers l'extérieur.

3. Elément de fixation selon la revendication 2, **caractérisé en ce qu'**un corps annulaire (38) est prévu sur la seconde extrémité (35) de la douille à segments (31) .

4. Elément de fixation selon l'une des revendications 1 à 3, **caractérisé en ce que** le côté extérieur des segments (32) a un contour extérieur en forme de toit, qui s'étend axialement en direction de l'axe longitudinal (12).

5. Elément de fixation selon l'une des revendications 1 à 4, **caractérisé en ce que** la douille à segments (31) comporte trois à douze segments (32).

6. Elément de fixation selon l'une des revendications 1 à 5, **caractérisé en ce que** les segments (32) de la douille à segments (31) sont reliés les uns aux autres de manière amovible par un cordon de jonction (33).

7. Elément de fixation selon l'une des revendications 1 à 6, **caractérisé en ce que** les moyens de déviation (26) sur la seconde extrémité (23) de la tige de cheville (21) comprennent des saillies (28) faisant radialement saillie à partir de la tige de cheville (21).

8. Elément de fixation selon la revendication 7, **caractérisé en ce que** le nombre des saillies (28) correspond au nombre des segments (32) de la douille à segments (31).

9. Elément de fixation selon l'une des revendications 1 à 8, **caractérisé en ce que** les moyens de déviation (26 ; 56) sur la seconde extrémité (23 ; 53) de la tige de cheville (21 ; 51) comprennent un chanfrein (27 ; 57) .

10. Elément de fixation selon l'une des revendications 1 à 6, **caractérisé en ce que** les moyens de déviation (46) sur la seconde extrémité (43) de la tige de cheville (41) comprennent une partie de collerette (47) faisant radialement saillie à partir de la tige de cheville (41), laquelle partie de collerette est formée conique en s'agrandissant à partir de la seconde extrémité (43) de la tige de cheville (41) en direction de la première extrémité de la tige de cheville (41).
